# EUROPÄISCHE PATENTSCHRIFT

(11) **EP 2 283 261 B1**
(45) Veröffentlichungstag und Bekanntmachung des Hinweises auf die Patenterteilung: **13.02.2013**
(21) Anmeldenummer: 09741801.6
(22) Anmeldetag: 09.04.2009
(51) Int. Cl.: F16K 11/07

(54) **WEGEVENTIL MIT EINER RASTVORRICHTUNG**
DIRECTIONAL VALVE WITH A LATCHING MECHANISM
DISTRIBUTEUR AVEC DISPOSITIF D'ENCLIQUETAGE

(30) Priorität: 07.05.2008 DE 102008022509
(43) Veröffentlichungstag der Anmeldung: 16.02.2011
(73) Patentinhaber: Robert Bosch GmbH, 70469 Stuttgart (DE)
(72) Erfinder: KÖTTER, Wolfgang, 71706 Markgröningen (DE); ROSE, Steffen, 71636 Ludwigsburg (DE); OLEMS, Lars, 70374 Stuttgart (DE)
(74) Vertreter: Thürer, Andreas
(86) Internationale Anmeldenummer: PCT/EP2009/002682
(87) Internationale Veröffentlichungsnummer: WO 2009/135582

(56) Entgegenhaltungen:
- EP-A- 0 843 793
- DE-C1- 4 323 846
- DE-C1- 19 913 380

## Beschreibung

Die Erfindung betrifft ein Wegeventil mit einer Rastvorrichtung gemäß dem Oberbegriff des Patentanspruchs 1.

In der EP 0 843 793 B1 ist ein derartiges Wegeventil mit einer Rastvorrichtung offenbart. Hierbei ist eine Rastkugel in Rasteingriff mit einem Wegeventilschieber bringbar. Die Rastkugel stützt sich dabei an einer ersten Feder ab, die zur Betätigung der Rastkugel gespannt wird. Das Spannen der ersten Feder erfolgt über eine Zugstange, die über einen von einem Systemdruck beaufschlagten Rastkolben in eine Rasteingriffsrichtung verschoben wird. Zur Entrastung der Rastkugel ist bei der Rastvorrichtung eine Kickout-Funktion vorgesehen, bei der die Rastung bei einem bestimmten Systemdruck gelöst wird. Die Kickout-Funktion erfolgt über einen Kickout-Kolben, der mit einer zweiten Feder in Rastrichtung gespannt und von dem Systemdruck entgegen der Rastrichtung beaufschlagt ist. Übersteigt der Systemdruck die Federkraft der zweiten Feder, wird der Kickout-Kolben entgegen der Rastrichtung verschoben und beaufschlagt die Zugstange und den Rastkolben entgegen der Rasteingriffsrichtung, wodurch die erste Feder und die Rastkugel entlastet und die Rastung gelöst ist. Die Federkraft der zweiten Feder kann über eine Verstellschraube verändert werden, wodurch die Auslösedruck der Kickout-Funktion einstellbar ist. Nachteilig bei dieser Lösung ist, dass die Rastvorrichtung äußerst komplex aus einer Vielzahl von Bauteilen aufgebaut ist und somit hohe Kosten in der Fertigung und der Montage erfordert.

Das Dokument EP 0 394 860 zeigt ein Wegeventil mit einer Rasteinrichtung mit der eine ständige Verrastung, eine lastdruckabhängige Verrastung und ein Nichtarretiermodus möglich ist. Hierbei ist in einem Wegeventilschieber eine Axialbohrung vorgesehen, in der ein Rastkolben eines Rastteils aufgenommen ist, über den Eingriffskörper durch die Umfangswandung des Wegeventilschiebers hindurch in entsprechenden Nuten des Ventilgehäuses bewegbar sind. Die Ansteuerung des Rastkolbens erfolgt über einen Ventilschieber einer Kickout-Anordnung, über die der Rastkolben mit einem Systemdruck beaufschlagbar ist, um den Rasteingriff herzustellen. Bei Überschreiten eines vorbestimmten Systemdrucks wird über den Schieber der Kickout-Anordnung eine Verbindung zu einem Tank geöffnet, so dass der am Rastkolben anliegende Druck abgebaut und der Rasteingriff aufgehoben wird. Die Auslösekraft der Kickout-Anordnung lässt sich über eine Stelleinrichtung von einer Bedienperson einstellen. Das heißt, bei der bekannten Ventilanordnung lässt sich durch entsprechendes Einstellen der Auslösekraft ein ständiges Verrasten, ein Herausstossen (Kickout) bei Überschreiten eines vorgegebenen Systemdrucks und eine Aufhebung der Rastung durch Einstellung einer minimalen Auslösekraft vorwählen. Eine derartige Variante hat allerdings den Nachteil, dass der Schieber einer Axialbohrung zur Aufnahme des Rastkolbens und mit entsprechenden Verbindungsleitungen zu der im Ventilgehäuse aufgenommenen Kickout-Anordnung versehen werden muss, wobei zur Fertigung aufgrund der geringen Abmessungen des Wegeventilschiebers ein erheblicher Aufwand erforderlich ist.

In dem Dokument DE 39 23 743 ist ein Wegeventil mit einer Rasteinrichtung offenbart. Damit bei unterschiedlichen Systemdrücken ein Wegeventilschieber in seine neutrale Mittelstellung von einer Federrückholeinrichtung zurückgeführt werden kann, ist der Rasteinrichtung eine Ausklinkeinrichtung zugeordnet. Diese hat ein auf einen bestimmten Grenzwert des Systemdrucks ansprechendes Druckventil mit einem Kolbenglied und einen Federspeicher mit einem auf einem Systemdruck unterhalb des Grenzwerts ansprechenden Kolben. Bei in Wirkung tretendem Kolben oder Kolbenglied wird ein Kegel verschoben, der in Raststellung befindliche Rastkugeln entlastet, so dass die Federrückholeinrichtung den Steuerschieber in seine neutrale Mittelstellung verschieben kann. Somit ist eine Rasteinrichtung mit einer Kickout- und einer Neutralstartfunktion ermöglicht. Bei der Neutralstartfunktion ist ein Mindestsystemdruck erforderlich, damit die Rasteinrichtung in einen Wegeventilschieber des Wegeventils eingreift und diesen hält. Dies führt zu einer erhöhten Sicherheit, da nach dem Stillsetzen und erneuten Starten der Maschine sich das Wegeventil in Neutralstellung befindet und keine überraschende Verbraucherbewegungen von mit dem Wegeventil verbundenen Verbrauchern stattfinden. Die in dieser Lösung realisierte Rasteinrichtung ist nur kostenintensiv herstellbar, da diese aus einer Vielzahl von unterschiedlichen und teilweise sehr aufwendig aufgebauten Bauteilen besteht.

Demgegenüber liegt der Erfindung die Aufgabe zugrunde, eine einfache und kostengünstige Rastvorrichtung für ein Wegeventil mit einer Kickout- und Neutralstartfunktion zu schaffen.

Diese Aufgabe wird durch ein Wegeventil mit einer Rastvorrichtung gemäß den Merkmalen des Patentanspruchs 1 gelöst.

Erfindungsgemäß weist ein Wegeventil eine Rastvorrichtung für einen Ventilschieber des Wegeventils auf. Die Rastvorrichtung hat ein Rastelement zum Einrasten in wenigstens eine Rastaufnahme des Ventilschiebers. Das Rastelement ist dabei über einen, mit einer Rastfeder in einer Rasteingriffsrichtung vorgespannten, Kickout-Kolben betätigbar, wobei dieser zum Lösen des Rasteingriffs entgegengesetzt zur Rasteingriffsrichtung mit einem Kickout-Druck beaufschlagbar ist. Die Rastfeder ist des weiteren an einem in der Rasteingriffsrichtung von einem Neutralstartdruck beaufschlagbaren Neutralstartkolben abgestützt. Diese Lösung hat den Vorteil, dass durch die geringe Anzahl an Bauteilen die Rastvorrichtung äußerst kompakt aufgebaut und einfach montierbar ist, wodurch Herstellungskosten gesenkt werden können.

Der Kickout-Kolben ist vorzugsweise als einfach fertigbarer Stufenkolben ausgeführt, dessen Ringstirnfläche mit dem Kickout-Druck beaufschlagbar ist.

Bei einem bevorzugten Ausführungsbeispiel sind eine kleine und eine große Stirnfläche des Kickout-Kolbens druckausgeglichen.

Vorteilhafterweise ist der Kickout-Kolben mit einer Innenbohrung versehen, die an den Stirnflächen angrenzende Rücklaufräume miteinander verbinden kann, wobei zum Abbau eines Kickout-Drucks ein von der Ringstirnfläche des Kickout-Kolbens abschnittsweise begrenzter Steuerraum über einen Düsenkanal mit den Rücklaufräumen verbunden ist. Der Düsenkanal kann dabei einfach im Kickout-Kolben ausgebildet sein.

Eine einfach und kostengünstig herstellbare Stufenbohrung, die senkrecht zur Ventilschieberachse in einem Wegeventilgehäuse des Wegeventils angeordnet sein kann, dient vorteilhafterweise zur Aufnahme der Rastvorrichtung.

Der Neutralstartkolben ist ebenfalls wie der Kickout-Kolben ein günstig fertigbarer Stufenkolben, dessen Ringfläche und kleine Stirnfläche mit einem Neutralstartdruck beaufschlagt ist.

Als Anschlag für den Neutralstartkolben kann vorteilhafterweise eine Verschlussschraube der Stufenbohrung dienen.

Das Rastelement kann als einfach herstellbares und damit kostengünstiges Bauteil in Form eines Raststiftes ausgebildet sein.

Sonstige vorteilhafte Weiterbildungen der Erfindung sind Gegenstand weiterer Unteransprüche.

Im Folgenden wird ein bevorzugtes Ausführungsbeispiel einer Erfindung anhand schematischer Zeichnungen näher erläutert. Es zeigen:
Figur 1 in einer Schnittdarstellung ein Wegeventil mit einer Rastvorrichtung gemäß einem Ausführungsbeispiel; und
Figur 2 in einer vergrößerten Schnittdarstellung die Rastvorrichtung aus Figur 1.

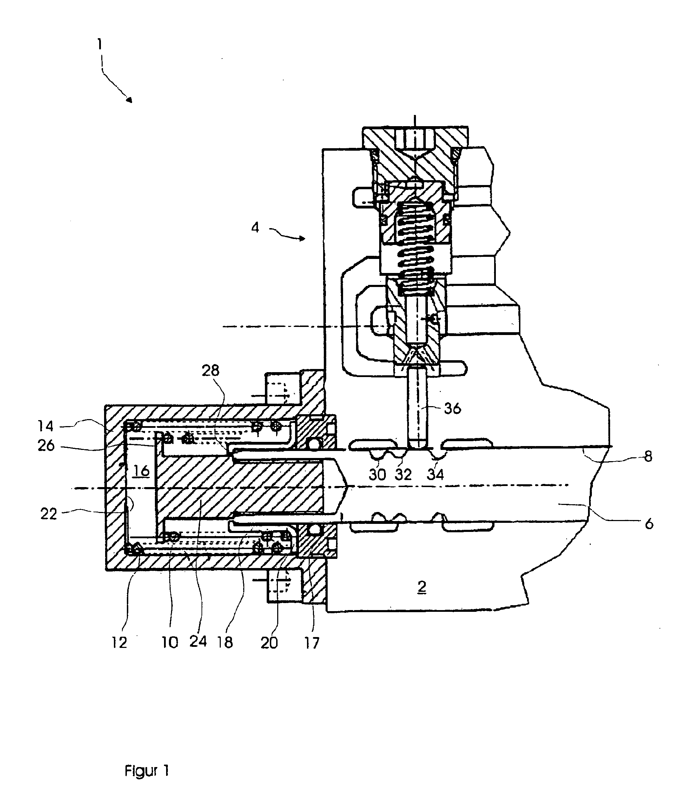

In der Figur 1 ist ein Ausschnitt eines Wegeventils 1 in einer Schnittdarstellung gezeigt. Ein derartiges Wegeventil 1 wird beispielsweise bei einem Load-Sensing-System eingesetzt, was in dem Datenblatt RD 66 130/02.07 der Firma Bosch Rexroth AG erläutert ist. Das Wegeventil 1 wird in dem Datenblatt als Wegeventil SB23-LS bezeichnet. Im Folgenden werden nur die zum Verständnis der Erfindung wesentlichen Bauteile des Wegeventils 1 beschrieben und im Übrigen auf die Beschreibung zum Wegeventil SB23-LS in dem genannten Datenblatt verwiesen.

Das Wegeventil 1 hat ein Ventilgehäuse 2 in dem eine Rastvorrichtung 4 eingebracht ist. Die Rastvorrichtung 4 dient zum Verrasten eines ebenfalls in dem Ventilgehäuse 2 angeordneten und in einer Ventilbohrung 8 geführten Ventilschiebers 6 des Wegeventils 1. Der in der Figur 1 dargestellte Ventilschieber 6 ist in einer Neutralstellung vorgespannt, d. h. nicht gezeigte Arbeitsanschlüsse sind beispielsweise gegenüber einem Druck- und Tankanschluss abgesperrt. Die Vorspannung erfolgt über eine innere und äußere Ventilfeder 10, 12, die in einem von einem Ventildeckel 14 umschlossenen Federraum 16, in den der Ventilschieber 6 ragt, angeordnet sind. Zwischen dem Ventildeckel 14 und dem Ventilgehäuse 2 ist ein ringförmiges den Ventilsschieber 6 umgreifendes Dichtelement 17 angeordnet. An diesem stützt sich in der Neutralstellung des Ventilschiebers 6 ein topfförmiger Federteller 18 mit einer radialen Federschulter 20 ab, wobei die äußere Ventilfeder 12 zwischen der Federschulter 20 und einer inneren Grundfläche 22 des Ventildeckels 14 gespannt ist. In dem in den Federraum 16 ragenden Bereich des Ventilschiebers 6 ist ein von der Grundfläche 22 des Ventildeckels 14 beabstandetes zylindrisches Verlängerungselement 24 eingeschraubt, dessen Durchmesser etwas geringer als der Ventilschieberdurchmesser ist. Das Verlängerungselement 24 hat an einem von dem Ventilschieber 6 abgewandten Ende einen radial auskragenden Stützvorsprung 26, wobei zwischen diesem und der Federschulter 20 der Federteller 18 die innere Ventilfeder 10 angeordnet ist. Wird der Ventilschieber 6 durch eine nicht gezeigte Verschiebeeinrichtung in der Figur 1 nach links verschoben, so nimmt dieser den Federteller 18 über einen zum Ventilschieber 6 weisenden Radialvorsprung 28 des Federtellers 18 mit und die äußere Ventilfeder 12 wird gespannt. Bei einer Verschiebung des Ventilschiebers 6 von der Neutralstellung in der Figur 1 nach rechts gleitet das Verlängerungselement 24 durch die Federteller 18 hindurch und die innere Ventilfeder 10 wird gespannt. Wird die Betätigung des Ventilschiebers 6 gestoppt, so wird die jeweilig gespannte Ventilfeder 10, 12 entspannt und der Ventilschieber 6 wird über die Federrückstellkräfte in die gezeigte Neutralstellung verschoben.

Der Ventilschieber 6 weist zum Verrasten mit der Rastvorrichtung 4 an seinem Umfang drei Rastaufnahmen in Form von umlaufenden Rastnuten 30, 32, 34 auf. Jede dieser Rastnuten 30, 32, 34 entspricht einer Arbeitsstellung bzw. einer Schwimmstellung des Wegeventils 1. In eine jeweilige Rastnut 30, 32 oder 34 ist ein Rastelement in Form eines zylindrischen Raststiftes 36 der Rastvorrichtung 4 einrastbar. Der Raststift 36 ist dabei in einer letzten Stufe 37 einer senkrecht zum Ventilschieber 6 eingebrachten Stufenbohrung 38 in dem Ventilgehäuse 2 gleitend und axial verschiebbar geführt.

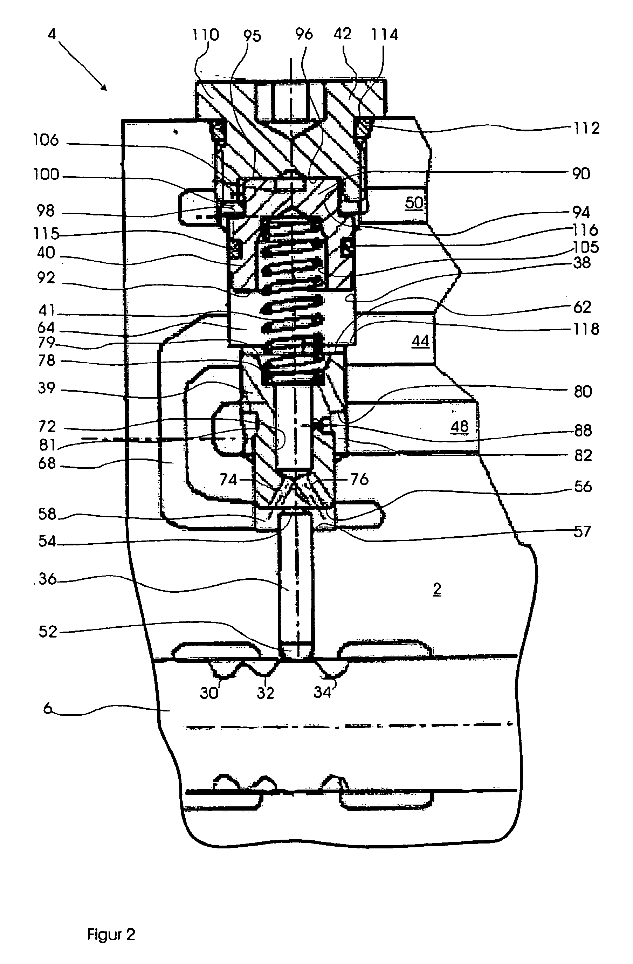

In Figur 2 wird im Folgenden die Rastvorrichtung 4 anhand eines vergrößerten Ausschnitts des Wegeventils 1 aus Figur 1 erläutert. Über einen in zwei Stufen der Stufenbohrung 38 axial verschiebbar gelagerten, abgestuften Kickout-Kolben 39 ist der Raststift 36 axial bewegbar. Zwischen dem Kickout-Kolben 39 und einem ebenfalls in der Stufenbohrung 38 gleitend gelagerten Neutralstartkolben 40 greift eine Rastfeder 41 an. Der Neutralstartkolben 40 wiederum liegt in der Figur 2, in der gezeigten Grundposition, an einer Verschlussschraube 42 der Stufenbohrung 38 an. In der Stufenbohrung 38 mündet ein Rücklaufkanal 44, der beispielsweise mit einem Tank verbunden sein kann, ein Kickout-Kanal 48 und ein Neutralstartdruckkanal 50, wobei die Kanäle 44, 48, 50 jeweils radial zu der Stufenbohrung 38 in das Ventilgehäuse 2 eingebracht sind.

Ein dem Ventilschieber 6 zugewandtes Stiftende 52 des Raststifts 36 ist abgerundet, wobei der Rundungsradius etwas kleiner als die Querschnittsradien der Rastnuten 30 bis 34 ist, um ein einfaches Eintauchen des Raststifts 36 in die Rastnuten 30 bis 34 zu ermöglichen. Das dem Ventilschieber 6 abgewandte Stiftende 54 ist leicht verrundet und stützt sich an einer kleinen Stirnfläche 56 des Kickout-Kolbens 39 ab.

Die kleine Stirnfläche 56 des Kickout-Kolbens 39 und eine dieser Stirnfläche 56 gegenüberliegende Ringfläche 57 der Stufenbohrung 38 begrenzen abschnittsweise einen ersten Rücklaufraum 58. Eine große Stirnfläche 62 des Kickout-Kolbens 39 begrenzt abschnittsweise einen zweiten Rücklaufraum 64, in dem der Rücklaufkanal 44 mündet. Der erste und zweite Rücklaufraum 58, 64 sind dabei über einen in dem Ventilgehäuse 2 eingebrachten Bogenkanal 68 in Druckmittelverbindung. Der Kickout-Kolben 39 hat eine sich von der großen Stirnfläche 62 aus erstreckende Sacklochbohrung 72, von deren Bohrungsgrund aus sich zwei schräg angeordnete Durchgangsbohrungen 74, 76 erstrecken, die in der kleinen Stirnfläche 56 münden. Die Rastfeder 41 greift an dem Kickout-Kolben 39 an einer von der Sacklochbohrung 72 aus radial zurückgestuften Federschulter 78 an. Die Mündungsöffnung 79 der Sacklochbohrung in die große Stirnfläche 62 ist radial zu einer Aufnahme der Rastfeder 41 erweitert. Eine durch eine Stufe des Kickout-Kolbens 39 gebildete Ringstirnfläche 80 ist durch eine umlaufende Einstichsnut 81 des Kickout-Kolbens 39 in ihrer Fläche vergrößert und begrenzt abschnittsweise einen Steuerraum 82, der mit dem Kickout-Kanal 48 verbunden ist. Ferner ist der Steuerraum 82 über einen radial in den Kickout-Kolben 39 im Bereich der Einstichsnut 81 eingebrachten Düsenkanal 88 mit der Sacklochbohrung 72 und über diese und den Durchgangsbohrungen 74, 76 zu den Rücklaufräumen 58, 64 zum Abbau eines Kickout-Drucks in Druckmittelverbindung. Der Kickout-Kolben 39 ist über die Ringstirnfläche 80 mit dem Kickout-Druck entgegengesetzt zur Rasteingriffsrichtung beaufschlagbar.

Der Neutralstartkolben 40 ist in einer weiteren Stufe der Stufenbohrung 38 geführt. Mit einer der Stirnfläche 62 des Kickout-Kolbens 39 gegenüberliegenden großen Stirnfläche 92 des Neutralstartkolbens 40 wird der Rücklaufraum 64 zusätzlich zur Stirnfläche 62 begrenzt. Ein radial zurückgestufter und von dem Kickout-Kolben 39 abgewandter Endabschnitt 90 des Neutralstartkolbens 40 taucht abschnittsweise in eine Zylinderausnehmung 94 der Verschlussschraube 42 ein und liegt in der Figur 2 dargestellten Grundposition mit einer kleinen Stirnfläche 95 an dem Ausnehmungsgrund 96 der Zylinderausnehmung 94 der Verschlussschraube 42 an. Durch den zurückgestuften Endabschnitt 90 ist an dem Neutralstartkolben 40 eine Kolbenringfläche 98 gebildet, die zusammen mit der kleinen Stirnfläche 95 einen Neutralstartsteuerraum 100 begrenzt. Dieser ist mit dem Neutralstartdruckkanal 50 verbunden. Entlang der Zylinderausnehmung 94 der Verschlussschraube 42 ist eine axiale Innennut 106 eingebracht, über die die kleine Stirnfläche 95 in der Grundposition mit dem Druck im Neutralstartsteuerraum 100 in Druckmittelverbindung steht. Über die Kolbenringfläche 98 und der kleinen Stirnfläche 95 ist der Neutralstartkolben 40 in Rasteingriffsrichtung der Rastvorrichtung 4 mit einem Neutralstartdruck beaufschlagbar. In eine Sacklochbohrung 105 des Neutralstartkolbens 40, die von der Stirnfläche 92 aus eingebracht ist und die einen etwas größeren Durchmesser als die Rastfeder 41 aufweist, taucht die Rastfeder 41 ein. Somit ist die Rastfeder 41 im montierten Zustand der Rastvorrichtung 4 sicher zwischen dem Kickout-Kolben 39 und dem Neutralstartkolben 40 gelagert.

Die Verschlussschraube 42 ist in die Stufenbohrung 38 eingeschraubt, wobei ein radial erweiterter Auflagebereich 110 die Einschraubtiefe begrenzt. Ein O-Dichtring 112 ist zwischen einer unterhalb des Auflagebereichs 110 der Verschlussschraube 42 eingebrachten Dichtungsnut 114 und dem Ventilgehäuse 2 angeordnet. Ein weiterer O-Dichtring 115 ist in einer in etwa mittig am Neutralstartkolben 40 ausgebildeten Dichtungsnut 116 eingebracht und dichtet den Spalt zwischen dem Neutralstartkolben 40 und der Stufenbohrung 38 ab, womit der Neutralstartsteuerraum 100 zum zweiten Rücklaufraum 64 abgedichtet ist. Anstelle der O-Dichtringe 112, 115 wären auch einfache Spaltdichtungen denkbar, allerdings würde dies zu einer geringen Leckage führen und die Fertigungstoleranzen der Dichtbereiche müssten geringer ausfallen.

Mit der Rastvorrichtung 4 ist für den Ventilschieber 6 des Wegeventils 1 die eingangs im Stand der Technik beschriebene Kickout- und eine Neutralstartfunktion ermöglicht. Die Funktionsweise der Rastvorrichtung 4 wird nun im Folgenden anhand der Figuren 1 und 2 erläutert.

Wird der Ventilschieber 6 des Wegeventils 1 durch Betätigung in eine Arbeitsstellung verschoben, so ist eine der Rastnuten 30, 32, 34 im Bereich des Raststiftes 36 angeordnet. Dieser wird über den Neutralstartdruck, der dem Pumpendruck beispielsweise des Eingangs aufgeführten Load-Sensing-Systems entsprechen kann und der über den Neutralstartsteuerraum 100 auf die Kolbenringfläche 98 des Neutralstartkolbens 40 beaufschlagt ist, betätigt. Der Neutralstartkolben 40 wird dabei durch den wirkenden Neutralstartdruck gegen die Kraft der Rastfeder in die Rasteingriffsrichtung verschoben, bis dieser an einer im zweiten Rücklaufraum 64 angeordneten Anschlagsfläche 118 der Stufenbohrung 38 mit der Stirnfläche 92 anliegt. Durch die Verschiebung wird die Rastfeder 41 gespannt und verschiebt über die Federkraft den Kickout-Kolben 39 ebenfalls in die Rasteingriffsrichtung, wobei dieser über die kleine Stirnfläche 56 den Raststift 36 in die Rastnut 30, 32 oder 34 eintaucht und den Ventilschieber 6 arretiert.

Wird der Ventilschiebers 6 nicht mehr betätigt, so ist die über den Neutralstärtdruck erzeugte und auf den Raststift 36 wirkende Rastkraft ausreichend, um den Ventilschieber 6 gegen die Rückstellkräfte der Ventilfedern 10, 12 in der arretierten Arbeitsposition zu halten.

Sinkt der Neutralstartdruck unter eine gewisse zur Arretierung notwendigen Mindestgröße, dann wird der Neutralstartkolben 40 durch die sich entspannende Rastfeder 41 in Richtung der Verschlussschraube 42 verschoben, womit die auf den Raststift 36 über den Kickout-Kolben 39 wirkende Rastkraft verringert wird. Über die Rückstellkräfte der Ventilfedern 10, 12 wird der Raststift 36 dann entgegen der verringerten Rastkraft aus der entsprechenden Rastnut 30, 32 oder 34 radial weg von dem Ventilschieber 6 gleitend herausgeschoben, wobei der Ventilschieber 6 entriegelt ist und durch die Rückstellkräfte in die Neutralstellung verschoben wird. Durch diese zur Arretierung des Ventilschiebers 6 erforderliche Mindestgröße des Neutralstartdrucks ist gewährleistet, dass nach dem Stillsetzen oder erneuten Starten einer Maschine, in der das Wegeventil 1 mit dieser Rastvorrichtung 4 betrieben wird, und somit nach einem Sinken des Neutralstartdrucks unter die Mindestgröße, die Rastung gelöst ist und sich der Ventilschieber 6 in einer Neutralstellung befindet und keine überraschenden Verbraucherbewegungen von durch das Wegeventil 1 angesteuerten Verbrauchern stattfinden.

Eine Möglichkeit den Rasteingriff des Raststifts 36 aktiv zu lösen, neben der gerade beschriebenen Neutralstartfunktion, besteht in der Kickout-Funktion. Hierbei wird die Ringstirnfläche 80 des Kickout-Kolbens 39 über den Kickout-Kanal 48 und den Steuerraum 82 mit einem Kickout-Druck beaufschlagt. Der Kickout-Druck kann dabei dem Lastdruck des genannten zugeordneten Verbrauchers entsprechen und beispielsweise über ein nicht dargestelltes Kickout-Ventil zugeschaltet werden. Wenn der Lastdruck einen bestimmten Maximalwert überschreitet, kann dann durch die Kickout-Funktion die Verrastung gelöst werden. Der Aufbau eines derartigen Kickout-Ventils ist in einer parallel hinterlegten Anmeldung der Anmelderin beschrieben, deren Offenbarung zu der vorliegenden Offenbarung gehört. Der Kickout-Druck wirkt über die Ringstirnfläche 80 der Rastfeder 41 entgegen und beaufschlagt den Kickout-Kolben 39 weg vom Raststift 36. Falls die durch den Kickout-Druck erzeugte Kickout-Kraft höher als die über den Neutralstartkolben 40 durch den Neutralstartdruck erzeugte Neutralstartkraft und die Federkraft der Rastfeder 41 ist, wird der Kickout-Kolben 39 weg vom Ventilschieber 6 verschoben, wobei die Rastkraft entsprechend geringer wird, bis diese einen bestimmten zur Arretierung notwendigen Mindestwert unterschreitet und der Raststift 36 über die Rückstellkräfte der Ventilfedern 10, 12, wie oben bei der Neutralstartfunktion beschrieben, radial von dem Ventilschieber 6 wegbewegt wird. Der Ventilschieber 6 wird dann wieder in die Neutralstellung verschoben.

Bei Umschaltung des nicht dargestellten Kickout-Ventils wird durch den Düsenkanal 88 im Kickout-Kolben 39 der Kickout-Druck über die Sacklochbohrung 72 und den Durchgangsbohrungen 74, 76 zu den Rücklaufräumen 58, 64, die über den Rücklaufkanal 44 beispielsweise mit einem Tank verbunden sind, abgebaut. Während der Ausführung der Kickout-Funktion und somit der Beaufschlagung des Kickout-Kolbens 39 mit dem Kickout-Druck ist der Druckmittelverlust in dem Steuerraum 82 über den Düsenkanal 88 minimal. Nach dem Ausschalten der Kickout-Funktion über das nicht dargestellte Kickout-Ventil, kann der Kickout-Druck in dem Steuerraum 82 und damit auf der Ringstirnfläche 80 über den Düsenkanal 88 zum Tank abgebaut werden.

Es ist noch anzumerken, dass der Kickout-Kolben 39 und der Neutralstartkolben 40 sehr günstig herstellbare Bauteile sind, die einfach in der Stufenbohrung 38 des Ventilgehäuses 2 gelagert sind. Die Rastvorrichtung 4 ist somit äußerst kostengünstig aufgebaut und einfach montierbar und da diese in dem Ventilgehäuse 2 eingebracht ist, auch sehr einfach abdichtbar.

Offenbart ist ein Wegeventil mit einer Rastvorrichtung für einen Ventilschieber, wobei die Rastvorrichtung ein Rastelement zum Einrasten in wenigstens eine Rastaufnahme des Ventilschiebers aufweist. Das Rastelement ist über eine Rastfeder in einem der Rasteingriffsrichtung vorgespannten Kickout-Kolben betätigbar. Dieser kann zum Lösen des Rasteingriffs entgegengesetzt zur Rasteingriffsrichtung mit dem Kickout-Druck beaufschlagt werden, wobei die Rastfeder an einem in der Rasteingriffsrichtung von einem Neutralstartdruck beaufschlagbaren Neutralstartkolben abgestützt ist.

## Patentansprüche

1. Wegeventil mit einer Rastvorrichtung (4) für einen Ventilschieber (6) mit einem Kickout-Kolben und einer Rastfeder die ein Rastelement (36) zum Einrasten in wenigstens eine Rastaufnahme (30, 32, 34) des Ventilschiebers (6) aufweist, wobei das Rastelemen (36) über einen über eine Rastfeder (41) in einer Rasteingriffsrichtung vorgespannten Kickout-Kolben (39) betätigt ist, der zum Lösen des Rasteingriffs entgegengesetzt zur Rasteingriffsrichtung mit einem Kickout-Druck beaufschlagbar ist **dadurch gekennzeichnet, dass** die Rastfeder (41) an einem in Rasteingriffsrichtung von einem Neutralstartdruck beaufschlagbaren und zur Erfindung gehorenden Neutralstartkolben (40) abgestützt ist.

2. Wegeventil nach Anspruch 1, wobei der Kickout-Kolben (39) ein Stufenkolben ist und eine Ringstirnfläche (80) mit dem Kickout-Druck beaufschlagbar ist.

3. Wegeventil nach Anspruch 1 oder 2, wobei eine kleine und eine große Stirnfläche (56, 62) des Kickout-Kolben (39) druckausgeglichen ist.

4. Wegeventil nach Anspruch 3, wobei der Kickout-Kolben (39) wenigstens eine Innenbohrung (72, 74, 76) aufweist, über die von den Stirnflächen (56, 62) begrenzte Rücklaufräume (58, 64) miteinander in Druckmittelverbindung stehen, wobei ein von der Ringstirnfläche (80) des Kickout-Kolbens (39) abschnittsweise begrenzter Steuerraum (82) über einen Düsenkanal (88) mit den Rücklaufräumen (58, 64) verbunden ist.

5. Wegeventil nach Anspruch 4, wobei der Düsenkanal (88) im Kickout-Kolben (39) ausgebildet ist.

6. Wegeventil nach einem der vorhergehenden Ansprüche, wobei eine senkrecht zur Ventilschieberachse angeordnete, in einem Wegeventilgehäuse (2) des Wegeventils (1) ausgebildete Stufenbohrung (38) zur Aufnahme der Rastvorrichtung (4) dient.

7. Wegeventil nach einem der vorhergehenden Ansprüche, wobei der Neutralstartkolben (40) ein Stufenkolben ist.

8. Wegeventil nach Anspruch 7, wobei eine Ringfläche (98) und eine kleine Stirnfläche (95) des Neutralstartkolbens (40) mit dem Neutralstartdruck beaufschlagt ist.

9. Wegeventil nach einem der Ansprüche 6 bis 8, wobei der Neutralstartkolben (40) an einer Verschlussschraube (42) der Stufenbohrung (38) abgestützt ist.

10. Wegeventil nach einem der vorhergehenden Ansprüche, wobei das Rastelement (36) ein Raststift (36) ist.

## Claims

1. Directional valve having a latching apparatus (4) for a valve slide (6) with a kickout piston and a latching spring which has a latching element (36) for latching into at least one latching receptacle (30, 32, 34) of the valve slide (6), the latching element (36) being actuated via a kickout piston (39) which is prestressed in a latching engagement direction via a latching spring (41) and, in order to release the latching engagement, can be loaded with a kickout pressure in the opposite direction to the latching engagement direction, **characterized in that** the latching spring (41) is supported on a neutral start piston (40) which can be loaded by a neutral start pressure in the latching engagement direction and belongs to the invention.

2. Directional valve according to Claim 1, the kickout piston (39) being a step piston, and it being possible for an annular end face (80) to be loaded with the kickout pressure.

3. Directional valve according to Claim 1 or 2, a small and a large end face (56, 62) of the kickout piston (39) being pressure-equalized.

4. Directional valve according to Claim 3, the kickout piston (39) having at least one inner bore (72, 74, 76), via which return spaces (58, 64) which are delimited by the end faces (56, 62) are in a pressure-medium connection with one another, a control space (82) which is delimited in sections by the annular end face (80) of the kickout piston (39) being connected to the return spaces (58, 64) via a nozzle channel (88).

5. Directional valve according to Claim 4, the nozzle channel (88) being formed in the kickout piston (39).

6. Directional valve according to one of the preceding claims, a stepped bore (38) which is arranged perpendicularly with respect to the valve-slide axis and is formed in a directional-valve housing (2) of the directional valve (1) serving to receive the latching apparatus (4).

7. Directional valve according to one of the preceding claims, the neutral start piston (40) being a step piston.

8. Directional valve according to Claim 7, an annular face (98) and a small end face (95) of the neutral start piston (40) being loaded with the neutral start pressure.

9. Directional valve according to one of Claims 6 to 8, the neutral start piston (40) being supported on a screw plug (42) of the stepped bore (38).

10. Directional valve according to one of the preceding claims, the latching element (36) being a latching pin (36).

## Revendications

1. Distributeur comprenant un dispositif d'encliquetage (4) pour un tiroir de soupape (6) doté d'un piston de retour automatique (« kickout ») et d'un ressort d'encliquetage, lequel dispositif d'encliquetage comprend un élément d'encliquetage (36) pour l'encliquetage dans au moins un logement d'encliquetage (30, 32, 34) du tiroir de soupape (6), l'élément d'encliquetage (36) étant actionné au moyen d'un piston de retour automatique (39) précontraint dans une direction d'engagement par encliquetage au moyen d'un ressort d'encliquetage (41), lequel piston de retour automatique peut être sollicité par une pression de retour automatique de manière opposée à la direction d'engagement par encliquetage pour libérer l'engagement par encliquetage, **caractérisé en ce que** le ressort d'encliquetage (41) s'appuie contre un piston de démarrage neutre (40) pouvant être sollicité dans la direction d'engagement par encliquetage par une pression de démarrage neutre et se rapportant à l'invention.

2. Distributeur selon la revendication 1, dans lequel le piston de retour automatique (39) est un piston étagé et une face frontale annulaire (80) peut être sollicitée par la pression de retour automatique.

3. Distributeur selon la revendication 1 ou 2, dans lequel une petite et une grande face frontale (56, 62) du piston de retour automatique (39) sont équilibrées en pression.

4. Distributeur selon la revendication 3, dans lequel le piston de retour automatique (39) comprend au moins un alésage intérieur (72, 74, 76) par l'intermédiaire duquel des espaces de reflux (58, 64) limités par les faces frontales (56, 62) sont en communication de fluide sous pression l'un avec l'autre, et dans lequel un espace de commande (82) en partie limité par la face frontale annulaire (80) du piston de retour automatique (39) est relié aux espaces de reflux (58, 64) par l'intermédiaire d'un canal de buse (88).

5. Distributeur selon la revendication 4, dans lequel le canal de buse (88) est réalisé dans le piston de retour automatique (39).

6. Distributeur selon l'une quelconque des revendications précédentes, dans lequel un alésage étagé (38) réalisé dans un boîtier de distributeur (2) du distributeur (1) et disposé perpendiculairement à l'axe du tiroir de soupape sert à la réception du dispositif d'encliquetage (4).

7. Distributeur selon l'une quelconque des revendications précédentes, dans lequel le piston de démarrage neutre (40) est un piston étagé.

8. Distributeur selon la revendication 7, dans lequel une face annulaire (98) et une petite face frontale (95) du piston de démarrage neutre (40) sont sollicitées par la pression de démarrage neutre.

9. Distributeur selon l'une quelconque des revendications 6 à 8, dans lequel le piston de démarrage neutre (40) s'appuie contre une vis-bouchon (42) de l'alésage étagé (38).

10. Distributeur selon l'une quelconque des revendications précédentes, dans lequel l'élément d'encliquetage (36) est une cheville d'encliquetage (36).
